# EUROPEAN PATENT APPLICATION

(11) **EP 1 016 341 A1**
(43) Date of publication of application: **05.07.2000**
(21) Application number: 98925649.0
(22) Date of filing: 23.06.1998
(51) Int. Cl.: A01G 13/10, A01G 13/04

(54) **BAG FOR THE PROTECTION OF TREE SEEDLINGS AGAINST AGRICULTURE PESTS**

(30) Priority: 24.06.1997 ES 9701741 U
(71) Applicant: Carratala Martinez, José Vicente, 12530 Burriana (ES)
(72) Inventor: Carratala Martinez, José Vicente, 12530 Burriana (ES)
(74) Representative: Aragones Forner, Rafael Angel
(86) International application number: ES9800180
(87) International publication number: WO9858531

(57) **Abstract**

The invention relates to a bag for the protection of seedlings and plants against agriculture pests. The bag is made of a material based on a non-woven fabric which is weather-resistant. The bag is positioned upside down with its mouth facing the ground so as to cover the whole seedling or plant in a loose manner, said mouth being closed and tied against the trunk. The type of the bag material provides for air circultaion and the passege of light and water through the bag. The bag of the invention permits the seedling or plant to be in total contact with the nature and atmospheric phenomena while protecting the seedling or plant against pests.

## Description

The present invention refers to a bag for protecting the seedlings against pests in agriculture.

Presently, the seedlings or small trees to be planted corresponding to several types of plantations, due to the numerous pests they are confronted to, they have to be sprayed or be applied with any other ways using different polluting products so that they can go up with their growth.

Said agrochemical products are of many types and environment-pollutant and even harmful to the same farmers applying them.

The bag, object of the present invention, makes unnecessary any application of polluting agrochemical products to promote a straight development of the seedling up to its conversion into a stronger grown tree.

The bag of the present invention protects the seedling against pests like those of the bark miner type, louses, white fly, spiders and others.

Further, the present bag provides the tree with a temperature uniformity, an air, light and water unfettered circulation and due to the bag features, the water - for instance, the rainwater- is not assailing the bag integrity as nor either the wind.

All that allows a greater and better growth of the seedling we are dealing with.

As shown, with the use of the bag of the present invention, the polluting rate in the field is remarkably reduced and the environment is thereby protected.

In agreement with the above, the bag for protecting seedlings against pests in agriculture is essentially characterized in that it is made up based on a non-woven fabric material keeping its integrity and loosely covering all the seedling in an inverted position and which downwardly located mouth is closed against the trunk enabling thus an air, light and water unfettered circulation.

The non-woven fabric material is polypropylene-based keeping its integrity against rainwater.

These and other characteristics will be more apparent in the following detailed description to facilitate which a sheet of drawings is accompanied thereto, in the drawings a practical case of embodiment has been illustrated cited however only by way of a non-exhaustive example of the scope of the present invention.

In the drawings:
Figure 1 is an elevation view of the bag of the present invention with a slightly opened mouth, and
Figure 2 is an elevation view of the seedling with the protective bag coupled therein.

In agreement with the drawings, the bag for protecting seedlings against pests in agriculture, object of the present invention, comprises a bag with numeral reference -1- being made up based on a non-woven fabric material keeping its integrity; this non-woven fabric preferably is polypropylene-based having physically strong characteristics against weather hash conditions.

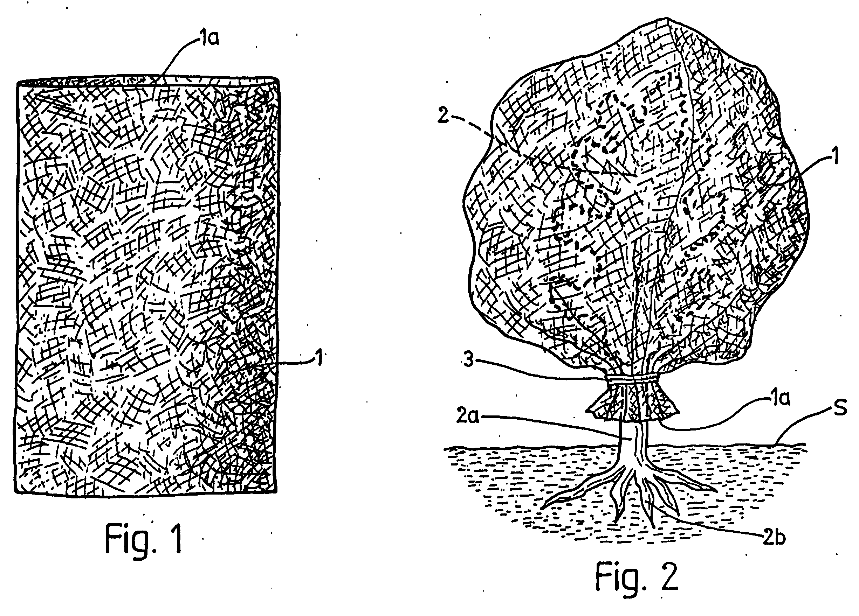

As illustrated in figure 2, the bag-1- is placed in an inverted position loosely covering all the branches and leaves up to the trunk of the seedling - 2- as the agricultural land and soil -S- recently-planted there young trees are called, the mouth -1a- of the bag -1- is downwardly closed against the trunk -2a- of the seedling -2- with suitable closing means -3- such as ropes, esparto, "raffia" called plastics strips, staples and the like which provide a rigid knotting however smooth enabling current development of the trunk -2a- of the seedling.

Such as is illustrated in figure 2, the bag -1- is placed loosely covering the seedling -2-. The seedling -2- is illustrated shown therein by a dashed line, the covering allowing then the proper seedlings to be thus normally grown.

The featured bag -1- based on a non-woven fabric allows a perfect air, light and water circulation through the seedling, a temperature uniformity throughout and a greater and better seedling growth.

Further, the features of the polypropylene-based non-woven fabric material provide porosity characteristics enabling an air, light and water unfettered circulation with proper strength which allows to keep its integrity against any weather harsh conditions, such as rain, wind and others.

As previously shown, the bag -1- of the present invention protects the seedling against several pests such as the bark miner, louses, white fly, spiders, scale insects, etc. Additionally it is quite unnecessary to apply polluting agrochemical products on the seedling -2- because the polluting rate is reduced including even at the same soil -S- wherein the roots -2b- of the seedling are thus absolutely normally grown, the growth is thereby greater and better. All that turns out also to be a superior environment protection.

Obviously, the bag can be made up of several sizes according to the seedling vegetal variety or with the proper sizes suited to its timely development.

The non-woven fabric making up the bag, preferably comprises polypropylene, however it can be made up with any equivalent similar material.

## Claims

1. Bag for protecting seedlings against pests in agriculture characterized in that it is made up based on a non-woven fabric material keeping its integrity and loosely covering all the seedling in an inverted position and which downwardly located mouth is closed against the trunk allowing thus an air, light and water unfettered circulation.

2. Bag, according to claim 1, characterized in that the non-woven fabric material is polypropylene-based perfectly keeping its integrity against rainwater.
